# EUROPÄISCHE PATENTSCHRIFT

(11) **EP 0 884 161 B1**
(45) Veröffentlichungstag und Bekanntmachung des Hinweises auf die Patenterteilung: **21.08.2002**
(21) Anmeldenummer: 98110097.7
(22) Anmeldetag: 03.06.1998
(51) Int. Cl.: B29C 51/38, B29C 33/22, B26D 5/16, F16H 21/44

(54) **Form- oder Stanzstation**
Moulding or punching station
Station de moulage ou de poinçonnage

(30) Priorität: 12.06.1997 DE 19724963
(43) Veröffentlichungstag der Anmeldung: 16.12.1998
(73) Patentinhaber: Adolf Illig Maschinenbau GmbH & Co. KG, 74081 Heilbronn (DE)
(72) Erfinder: Karbach, Helmut, 74078 Heilbronn-Frankenbach (DE)

(56) Entgegenhaltungen:
- DE-C- 520 490
- US-A- 4 485 708

## Beschreibung

Die Erfindung betrifft eine Form- oder Stanzstation in einer Vorrichtung zum Verformen einer Folienbahn nach der Gattung des Hauptanspruches.

Eine aus der DE 34 36 469 c 1 bekannte Form- bzw. Stanzstation weist eine Antriebseinrichtung auf, die als Kniehebelantrieb ausgebildet ist, womit hohe Schließ- bzw. Zuhaltekräfte bei sinusförmigem Bewegungsablauf gegeben sind. Nachteilig ist der relativ hohe Aufwand an Teilen, was zu hohen Kosten führt. Der seitliche Platzbedarf des Kniehebels ist recht groß und behindert Teile benachbarter Stationen, so daß die Vorrichtung eine gewisse Baulänge aufweisen muß. Zudem übt ein Kniehebelantrieb eine seitliche Kraft auf die Tischführung aus, was zu einem einseitigen Verschleiß führt.

Der Erfindung liegt die Aufgabe zugrunde, die Form- oder Stanzstation so auszubilden, daß sie einfach im Aufbau und damit kostengünstig sowie platzsparend ist. Seitliche Kräfte auf die Tischführungen sollten nicht auftreten. Dabei sollte ein sinusförmiger Bewegungsablauf der Tischbewegung gegeben sein, die Führung selbst sollte exakt und stabil sein.

Zur Lösung dieser Aufgabe werden die kennzeichnenden Merkmale des Hauptanspruches vorgeschlagen. Vorteilhafte Weiterbildungen sind Gegenstand der Unteransprüche.

Der Gegenstand der Erfindung ist nachfolgend anhand der schematischen Zeichnungen beschrieben. Es zeigt:

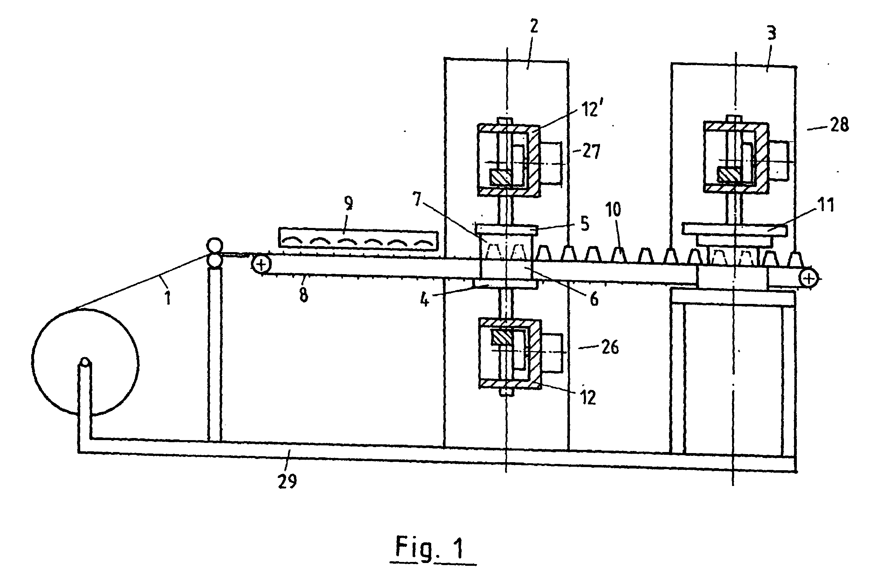

- Figur 1 -: Eine Seitenansicht einer Vorrichtung zum Verformen eines Bandes aus thermoplastischer Kunststoffolie mit einer Form- und einer Stanzstation.
- Figur 2 -: Einen Querschnitt durch die Antriebseinrichtung des Untertisches der Formstation.
- Figur 3 -: Einen Schnitt durch die Antriebseinrichtung gemäß Figur 2 entlang der Linie A - A.

Die Vorrichtung zum Verformen einer Folienbahn 1 aus thermoplastischem Kunststoff weist eine Formstation 2 und eine Stanzstation 3 auf. In der Formstation 2 sind ein Untertisch 4 und ein Obertisch 5 zur Aufnahme von zwei Werkzeughälften 6, 7 angeordnet. Aus der von einer Transporteinrichtung 8 taktweise bewegten, von der Heizung 9 erwärmten Folienbahn 1 werden mittels Differenzdruck Behälter 10 geformt, die in der Stanzstation 3 ausgetrennt werden.

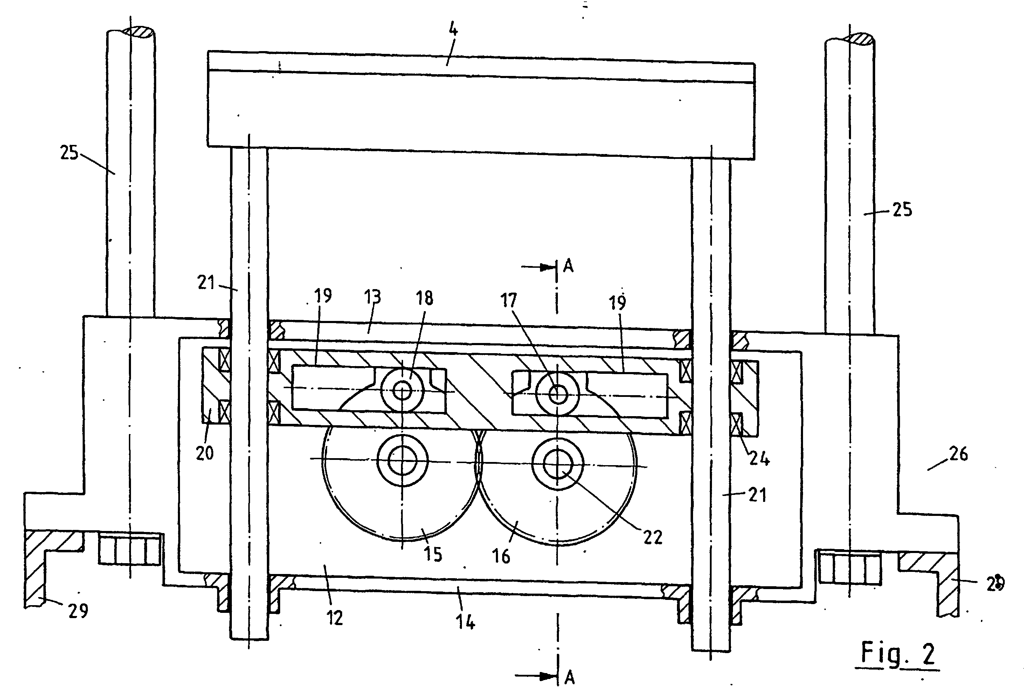

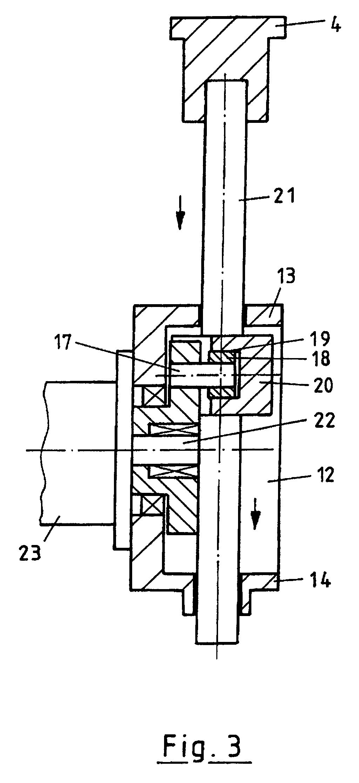

Der Aufbau der Antriebseinrichtung 26 der Formstation 2 ist am Beispiel des Antriebes für den Untertisch 4 nach den Figuren 2 und 3 beschrieben. Sie kann in gleicher Weise für den Obertisch 5 (Antriebseinrichtung 27) und den Stanztisch 11 (Antriebseinrichtung 28), ausgeführt sein.

Ein ortsfester Querträger 12 mit oberem Steg 13 und unterem Steg 14 ist Lagerstelle für zwei Antriebsräder 15, 16, die teilweise mit einer Verzahnung versehen sind und ineinander kämmen. Beide Antriebsräder 15, 16 tragen exzentrisch je einen Lagerzapfen 17 zur Aufnahme einer sich drehenden Rolle 18. Die Rollen 18 sitzen in je einem Schlitz 19, wobei sich die Schlitze 19 in der Querbrücke 20 befinden. Mit dieser Querbrücke 20 verbunden sind zwei Stangen 21, die in den Stegen 13, 14 geführt und mit dem Untertisch 4 verbunden sind. Eines der Antriebsräder 15 oder 16 steht mit der Antriebswelle 22 eines Antriebes 23 in Verbindung, das andere ist frei drehend am Querträger 12 gelagert.

Die Verbindung zwischen Stangen 21 und Querbrücke 20 wird vorzugsweise über formschlüssige Klemmeinheiten 24 vorgenommen, so daß eine leichte Einstellung der unteren bzw. oberen Endlage des bewegten Untertisches 4 vorgenommen werden kann.

Als einfachster und kostengünstigster Antrieb 23 bietet sich ein pneumatisch betätigter Schwenkzylinder an. Einen gleichmäßigeren Bewegungsablauf bietet ein Getriebemotor als Antrieb 23. Setzt man einen Servomotor als Antrieb 23 ein, gibt es zusätzliche Möglichkeiten, die Geschwindigkeit der Hubbewegung des Untertisches 4 in Abhängigkeit seiner Lage zu verändern und gemäß den Anforderungen zu optimieren.

Der Querträger 12 der Antriebseinrichtung 26 ist ortsfest mit dem Gestell 29 der Vorrichtung verbunden. Wenn in der Formstation 2 ein Obertisch 5 ebenfalls höhenbeweglich ausgeführt ist, wird man zweckmäßigerweise den oberen Querträger 12' über Säulen 25 mit dem unteren Querträger 12 verbinden. Es ist ferner von Vorteil, die Verbindung in an sich bekannte Weise über Gewindebuchsen vorzunehmen, die über einen nicht dargestellten Gleichlauf verbunden sind. Auf diese Weise kann eine feine Verstellung des Abstandes zwischen den beiden Querbrücken 12, 12' zur Anpassung an unterschiedliche Werkzeughöhen bzw. zur Erzeugung einer bestimmten Vorspannkraft erzielt werden.

## Patentansprüche

1. Form- oder Stanzstation in einer Vorrichtung zum Verformen einer Folienbahn aus thermoplastischem Kunststoff zu Behältern oder Verpackungen mit einer Antriebseinrichtung für einen oder beide Tische zur Erzeugung einer hohen Schließkraft mit sinusförmigem Bewegungsablauf, **gekennzeichnet durch** folgende Merkmale:
a) mindestens einen ortsfesten Querträger (12) mit einem oberen und unteren Steg (13, 14);
b) zwischen den Stegen (13, 14) verläuft eine zu diesen höhenverschiebbare Querbrücke (20) mit Schlitzen (19) senkrecht zur Bewegungsrichtung des Tisches (4, 5, 11);
c) in den Schlitzen (19) gleiten zwei an Zapfen (17) gelagerte Rollen (18), die exzentrisch an je einem Antriebsrad (15, 16) sitzen, wobei die Antriebsräder (15, 16) ineinander kämmen;
d) die beiden Antriebsräder (15, 16) stehen mit einem Antrieb (23) in Verbindung;
e) der Tisch (4, 5, 11) ist mit der Querbrücke (20) verbunden.

2. Form- oder Stanzstation nach Anspruch 1 **dadurch gekennzeichnet, daß** als Antrieb (23) ein pneumatischer Schwenkzylinder eingesetzt ist.

3. Form- oder Stanzstation nach Anspruch 1 **dadurch gekennzeichnet, daß** als Antrieb (23) ein Getriebemotor eingesetzt ist.

4. Form- oder Stanzstation nach Anspruch 1 **dadurch gekennzeichnet, daß** als Antrieb (23) ein Servomotor eingesetzt ist.

5. Form- oder Stanzstation nach einem der Ansprüche 1 bis 4 **dadurch gekennzeichnet, daß** die Verbindung zwischen der Querbrücke (20) und dem Tisch (4, 5, 11) über Stangen (21) erfolgt, die in den Stegen (13, 14) des Querträgers (12, 12') geführt sind.

6. Form- oder Stanzstation nach Anspruch 5 **dadurch gekennzeichnet, daß** zum Festklemmen der Stangen (21) mit der Querbrücke (20) kraftschlüssige Klemmeinheiten (24) eingesetzt sind.

7. Form- oder Stanzstation nach einem der Ansprüche 1 bis 6 **dadurch gekennzeichnet, daß** der Querträger (12) mit einem zweiten Querträger (12') über Säulen (25) verbunden ist, wobei der Abstand zwischen den Querträgern (12, 12') veränderbar ist.

8. Form- oder Stanzstation nach Anspruch 8 **dadurch gekennzeichnet, daß** die Verbindung über Gewindebuchsen erfolgt, die mit einer Gleichlaufeinrichtung versehen sind.

## Claims

1. Moulding or punching station in a device for deforming a foil web of thermoplastic synthetic material into containers or packs, with a drive device for one or two tables for producing a high closing force with a sinusoidal course of movement, **characterised by** the following features:
a) at least one stationary crossbeam (12) with an upper and a lower web (13, 14);
b) a transverse bridge (20) with slots (19) perpendicular to the direction of movement of the table (4, 5, 11) extends between the webs (13, 14) and is displaceable in height relative thereto;
c) two rollers (18), which are mounted at pins (17) and are each seated eccentrically at a respective drive wheel (15, 16), slide in the slots (19), wherein the drive wheels (15, 16) mesh with one another;
d) the two drive wheels (15, 16) are connected with a drive (23); and
e) the table (4, 5, 11) is connected with the transverse bridge (20).

2. Moulding or punching station according to claim 1, **characterised in that** a pneumatic pivot cylinder is used as drive (23).

3. Moulding or punching station according to claim 1, **characterised in that** a geared motor is used as drive (23).

4. Moulding or punching station according to claim 1, **characterised in that** a servomotor is used as drive (23).

5. Moulding or punching station according to one of claims 1 to 4, **characterised in that** the connection between the transverse bridge (20) and the table (4, 5, 11) is effected by way of rods (21) guided in the webs (13, 14) of the crossbeam (12, 12').

6. Moulding or punching station according to claim 5, **characterised in that** force-locking clamping units (24) are used for clamping fast the rods (21) with the transverse bridge (20).

7. Moulding or punching station according to one of claims 1 to 6, **characterised in that** the crossbeam (12) is connected with a second crossbeam (12') by way of columns (25), wherein the spacing between the crossbeams (12, 12') is variable.

8. Moulding or punching station according to claim 8, **characterised in that** the connection is effected by way of threaded bushes, which are provided with a synchronising device.

## Revendications

1. Station de moulage et de formage dans un dispositif de mise en forme de film en forme de bande en matière thermoplastique pour réaliser des récipients ou des emballages comprenant une installation d'entraînement pour une ou deux tables, pour créer une force de fermeture, importante avec un mouvement sinusoïdale
**caractérisée en ce qu'**
elle comprend
a) au moins une traverse fixe (12) avec une aile supérieure et une aile inférieure (13, 14),
b) entre les ailes (13, 14), passe un pont transversal (20) réglable en hauteur par rapport à ces ailes et comportant des fentes (19) perpendiculaires à la direction de mouvement de la table (4, 5, 11),
c) deux galets (18) portés par des tourillons (17) glissent dans les fentes (19), ces galets étant montés de manière excentrée chacun sur une roue d'entraînement (15, 16), ces roues d'entraînement (15, 16) engrénant l'une avec l'autre,
d) les deux roues d'entraînement (15, 16) sont reliées à un moyen d'entraînement (23),
e) la table (4, 5, 11) est reliée au pont transversal (20).

2. Station de formage et de poinçonnage selon la revendication 1,
**caractérisée en ce que**
le moyen d'entraînement (23) est un cylindre pneumatique basculant.

3. Station de formage et de poinçonnage selon la revendication 1,
**caractérisée en ce que**
le moyen d'entraînement (23) est un motoréducteur.

4. Station de formage et de poinçonnage selon la revendication 1,
**caractérisée en ce que**
le moyen d'entraînement (23) est un servomoteur.

5. Station de formage et de poinçonnage selon l'une quelconque des revendications 1 à 4,
**caractérisé en ce que**
la liaison entre le pont transversal (20) et la table (4, 5, 11) est réalisée par des tiges (21) guidées dans les ailes (13, 14) de la transverse (12, 12').

6. Station de formage et de poinçonnage selon la revendication 5,
**caractérisée par**
des unités de serrage (24) agissant par la force pour serrer les tiges (21) sur le pont transversal (20).

7. Station de formage et de poinçonnage selon l'une quelconque des revendications 1 à 6,
**caractérisé en ce que**
la traverse (12) est reliée à une seconde traverse (12') par des colonnes (25) et la distance entre les traverses (12, 12') est variable.

8. Station de formage et de poinçonnage selon la revendication 7,
**caractérisée en ce que**
la liaison se fait par des douilles de palier lisses munies d'installation de synchronisation.
